# EUROPÄISCHE PATENTSCHRIFT

(11) **EP 2 346 727 B1**
(45) Veröffentlichungstag und Bekanntmachung des Hinweises auf die Patenterteilung: **15.05.2013**
(21) Anmeldenummer: 09777290.9
(22) Anmeldetag: 20.07.2009
(51) Int. Cl.: B60T 17/08, F16L 23/04

(54) **VERFAHREN ZUR HERSTELLUNG EINER FORMSCHLÜSSIGEN VERBINDUNG ZWISCHEN ZWEI BAUTEILEN EINES IN EINEM FAHRZEUG BEFINDLICHEN AGGREGATS, -WERKZEUG UND -AGGREGAT**
METHOD FOR PRODUCING A FORM-FIT CONNECTION BETWEEN TWO COMPONENTS OF AN ASSEMBLY LOCATED IN A VEHICLE, TOOL, AND ASSEMBLY
PROCÉDÉ DE RÉALISATION D'UNE LIAISON PAR COMPLÉMENTARITÉ DE FORMES ENTRE DEUX COMPOSANTS D'UN GROUPE SE TROUVANT DANS UN VÉHICULE, AINSI QU'OUTIL ET GROUPE CORRESPONDANTS

(30) Priorität: 28.10.2008 DE 102008053459
(43) Veröffentlichungstag der Anmeldung: 27.07.2011
(73) Patentinhaber: WABCO GmbH, 30453 Hannover (DE)
(72) Erfinder: BRANDT, Oliver, 38120 Braunschweig (DE); KOCJAN, Tomasz, PL-44-217 Rybnik (PL); SCHRADER, Frank, 30916 Isernhagen (DE)
(74) Vertreter: Lauerwald, Jörg
(86) Internationale Anmeldenummer: PCT/EP2009/005237
(87) Internationale Veröffentlichungsnummer: WO 2010/049021

(56) Entgegenhaltungen:
- EP-A- 0 915 282
- EP-A- 1 746 002
- US-A- 4 832 380
- US-A- 5 765 466
- US-A- 6 129 004

## Beschreibung

Die Erfindung bezieht sich auf ein Verfahren zur Herstellung einer formschlüssigen Verbindung zwischen einem ersten Bauteil und einem zweiten Bauteil eines in einem Fahrzeug befindlichen Aggregats gemäß dem Oberbegriff des Patentanspruchs 1. Sie bezieht sich insbesondere auf die Verbindung von Teilen eines Bremszylinders in einem Fahrzeug.

Für Verbindungen verschiedener Abschnitte eines Bremszylinders, beispielsweise eines Betriebsbremsgehäuses mit einem Federspeichergehäuse, sind verschiedene Varianten bekannt.

So ist zum Beispiel in der US-PS 4,109,350 ein geteiltes Spannband beziehungsweise Klemmband offenbart, welches einen U-förmigen Querschnitt hat, und so über je eine Schulter oder einen Flansch eines Gehäuseteiles herumgelegt wird, dass die Gehäuseteile formschlüssig zusammengehalten werden. Durch die Form des Spannbandes wird durch das radiale Schließen eine axiale Kraft zum Verspannen der einzelnen Bauteile erreicht. Zwischen den Gehäuseteilen ist in der Regel eine Membran aus gummiartigem Material eingespannt, welche zur Betätigung der Betriebsbremse eine gewünschte Kraft aufbringt. Hierzu wird ein Druckraum zwischen der einen Gehäusehälfte und der Membran mit Druckluft gefüllt.

Ein Nachteil eines derartigen geteilten Spannbandes ist neben der relativ aufwändigen Herstellung der übliche Zusammenschluss der Enden des Spannbandes durch eine Schraubverbindung. Eine solche Schraubverbindung kann nämlich versehentlich durch nicht genügend qualifiziertes Personal geöffnet werden. Dann besteht die Gefahr, dass die Teile des Bremszylinders mit großer Kraft auseinander fliegen. Dies ist besonders dann der Fall, wenn es sich um einen kombinierten Betriebs- und Federspeicherbremszylinder handelt.

Ein weiterer Nachteil des bekannten geteilten Spannbandes ergibt sich durch den Montageprozess, bei dem, durch die radiale Montage des Spannbandes, es sich schwierig erweist, die konzentrische Ausrichtung der Gehäuseteile und der Membran zu gewährleisten, wodurch eine ungleiche axiale Pressung im umlaufenden Einspannbereich verursacht wird, und die Dichtigkeit, besonders bei höheren Drücken, nicht gewährleistet werden kann.

Eine weitere Möglichkeit zum Verbinden zweier Gehäuseteile eines Bremszylinders ist aus der DE 10 2005 053 674 B4 bekannt. Dabei handelt es sich um ein Verfahren zur Herstellung von aus wenigstens zwei Gehäusebauteilen bestehenden Gehäusen in Fahrzeugen. Das eine Gehäuse ist dabei mit einem vorstehenden Rand versehen, welches in einem axialen Bördelverfahren um eine Schulter beziehungsweise einen Flansch des anderen Gehäusebauteiles herumgeformt wird.

Nachteil dieser Verbindungsart ist, dass bei diesem bekannten Verfahren die Bördelverbindung naturgemäß die gleiche Materialstärke und das gleiche Material des einen Gehäuseteiles aufweist. Dieses kann aber aus Kosten- und Gewichtsgründen relativ dünn ausfallen. Es ist also nicht möglich, beispielsweise an dieser kritischen Stelle ein stärkeres Material oder ein andersartiges Material, z.B. Aluminium oder Edelstahl, einzusetzen.

Ebenso nachteilig ist es, dass der Oberflächenschutz, z.B. eine Verzinkung oder Lackierung, am Gehäuseteil und an dem zugehörigen umzuformenden Rand gleich ist. Das bedeutet dass sowohl wirtschaftliche als auch technische Bedingungen, wie z.B. ein erforderlicher Korrosionsschutz nach der Verformung, bei der Wahl des Oberflächenschutzes für das gesamte Teil berücksichtigt werden müssen.

Es sind auch radiale Bördelverfahren bekannt, z.B. aus der US 5,067,391. Bei diesem Verfahren wird der überstehende Rand von außen durch eine radial nach innen wirkende Kraft, z. B. mittels Zustellung einer Rolle, über eine umlaufende Schulter gebördelt. Dabei sind mehrere Rotationen relativ zwischen Rolle und Bauteil oder Gerät notwendig um durch die graduelle Zustellung der Rolle oder des Bauteiles oder Gerätes die erforderliche Verformung zu erreichen. Ein Nachteil dieser Methode liegt darin, dass durch die starke Materialverformung durch die Rolle eine zum Korrosionsschutz dienende Beschichtung beschädigt wird. Bremszylinder, die auf diese Weise hergestellt werden, können erfahrungsgemäß die erhöhten Anforderungen an Korrosionsschutz nicht erfüllen. Rückschlüsse auf die Anwendung dieses Verfahrens kann der Fachmann an Hand der Verformung des Materials und der Beschaffenheit des Oberflächenschutzes ziehen.

Der Erfindung liegt die Aufgabe zugrunde, eine formschlüssige Verbindung zwischen zwei Bauteilen eines in einem Fahrzeug befindlichen Aggregats, insbesondere eines Bremszylinders anzugeben, welches die oben genannten Nachteile nicht aufweist. Weiter sollen durch das Verfahren die Oberflächenbeschichtungen der verwendeten Teile, also zum Beispiel Lackierungen oder Verzinkungen, nicht beschädigt werden.

Diese Aufgabe wird durch die im Patentanspruch 1 enthaltende Erfindung gelöst. Die Unteransprüche enthalten zweckmäßige Weiterbildungen.

Der Patentanspruch 1 beschreibt ein zweistufiges Verfahren, wobei zunächst der untere Rand eines geschlossenen zylinderförmigen Verschlussringes und danach der obere Rand umgebördelt werden.

Der Nebenanspruch 12 beschreibt ein einstufiges Verfahren, wobei beide Ränder des Verschlussringes mit einem einzigen Hub eines Stempels gemeinsam umgebördelt werden.

Durch das erfindungsgemäße Verfahren können durch eine entsprechende Wahl der Stärke und des Materials des Verschlussringes besonders feste Verbindungen hergestellt werden. Hierdurch ist es möglich, die maximal zulässigen Betriebsdrücke der Bremszylinder beispielsweise von 10 auf 13 bar, oder auch noch höher, anzuheben. Ein weiterer Vorteil der erfindungsgemäßen besonders festen Verbindung ergibt sich beim Befahren von Schlechtwegen, bei denen große Beschleunigungskräfte auf den ungefederten Bremszylinder wirken.

Weiter wird auch die Dichtigkeit der Verbindung im Vergleich zu einer bekannten Ausführung mit geteiltem oder nicht geteiltem Klemmring mit Verbindungsschraube erhöht, da keine nicht geklemmten Abschnitte im Bereich der Schraube mehr vorhanden sind.

Weiter können auch keine radialen Setzverluste des Klemmrings auftreten, die eine Verringerung der axialen Pressung verursachen würden.

Außerdem ist die Verbindung nicht mehr durch bloßes Drehen der Spannband-Befestigungschraube versehentlich lösbar. Dadurch wird die Gefahr von Unfällen durch einen auseinanderfliegenden Bremszylinder beseitigt.

Durch das angewendete Verfahren einer axialen Bördelung wird weiter im Vergleich zu einer radialen Bördelung das Material des Verschlussringes geschont, und so eine Beschädigung der Beschichtung, also des Lackes oder der Verzinkung, vermieden. Eine geforderte Salzwasser-Korrosionsbeständigkeit für eine festgelegte Anzahl von Tagen für den Bremszylinder, der sich ja bekanntlich in einer sehr exponierten Lage am Rad, also an der Unterseite des Fahrzeugs, befindet, kann so leichter erreicht werden.

Durch den erfindungsgemäßen axialen Bördelprozess ist einerseits der Verformungsgrad des Materials und des Oberflächenschutzes gering, und andererseits die Prozesszeit der Herstellung kurz, da der axiale Arbeitshub nur maximal die Länge des umzubördelnden Randes beträgt.

Dagegen erstreckt sich beim bekannten radialen Bördeln der Verformungsprozess rotatorisch über eine mehrfache Umfangslänge des Bremszylinders, welches auch einen höheren Verformungsgrad verursacht.

Die Erfindung wird im Folgenden anhand einer Zeichnung näher erläutert.

Diese zeigt in
- Fig. 1: eine Außenansicht eines Federspeicher-Bremszylinders mit dem erfindungsgemäßen gebördelten Verbindungselement,
- Fig. 2: den Bremszylinder nach Fig. 1 in geschnittener Darstellung mit einseitig fertiggestellter Klemmverbindung,
- Fig. 3: den Bremszylinder nach Fig. 2 mit vollständig fertig gestellter Klemmverbindung,
- Fig. 4: eine Bremszylinder-Variante als Doppelmembran-Bremszylinder mit zwei Klemmverbindungen,
- Fig. 4a: eine größere Darstellung der Federspeicher-Klemmverbindung aus Fig. 4,
- Fig. 4b: eine größere Darstellung der Betriebsbrems-Klemmverbindung aus Fig. 4,
- Fig. 5: ein geteiltes Bördelwerkzeug zum Bördeln eines Verschlussringes,
- Fig. 6: das Bördelwerkzeug aus Fig. 5 im zusammengefügten Zustand mit Verschlussring,
- Fig. 7: eine geschnittene Darstellung des Bördelwerkzeugs der Fig. 5 oder 6 mit einer zur Umformung benutzten geformten Kontur und einer Druckplatte,
- Fig. 8: eine vergrößerte Darstellung der Fig. 7 bei Beginn des Bördelvorgangs,
- Fig. 9: ein Teil der Fig. 8 nach erfolgter Bördelung mit angehobenem ersten Bauteil,
- Fig. 10: eine Darstellung gemäß Fig. 9, aber mit abgesenktem ersten Bauteil,
- Fig. 11-14: eine Variante des erfindungsgemäßen Bördelverfahrens, wobei die Verbindung in einem Hub fertig gestellt wird.

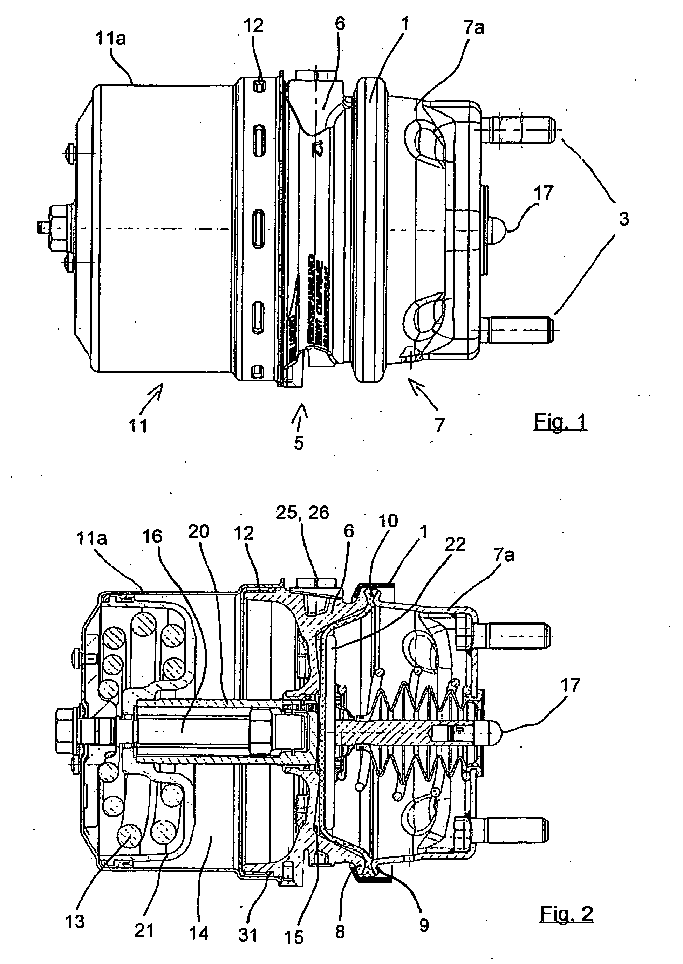

Die Figur 1 zeigt eine Außenansicht eines Bremszylinders 5 mit einer gebördelten Verbindung (Verschlussring 1) gemäß der Erfindung. Der Bremszylinder 5 besteht aus einem Federspeicherteil 11 und einem Betriebsbremszylinder 7, sowie einem ersten Bauteil 6 (Verbindungsteil), welches funktional dem Federspeicherteil 11 als auch dem Betriebsbremszylinder 7 als mittleres Gehäuseteil zugehörig ist, und gleichzeitig das Verbindungsteil darstellt. Der grundsätzliche Aufbau derartiger Federspeicher-Bremszylinder ist dem Fachmann bekannt. Das Federspeichergehäuse 11a und das erste Bauteil 6 sind hier mittels eines Bajonettverschlusses 12 verbunden. Das erste Bauteil 6 und ein zweites Bauteil 7a (Gehäuse des Betriebsbremszylinders) sind mittels eines geschlossenen Verschlussringes 1 verbunden. Dieser Verschlussring 1 ist mittels des Verfahrens gemäß Patentanspruch 1 oder Patentanspruch 12 hergestellt. Der Bremszylinder 5 ist mittels Befestigungsschrauben 3 am Fahrzeug in der Nähe des zu bremsenden Rades befestigt. Bei Bremsbetätigung wird eine Betriebsbrems-Kolbenstange 17 ausgefahren und hiermit die eigentliche Radbremse (nicht dargestellt) betätigt.

Die Figur 2 zeigt den Bremszylinder aus Figur 1 in geschnittener Darstellung. Der Federspeicherteil 11 enthält eine Speicherfeder 13, welche hier im gespannten Zustand dargestellt ist. Die Kraft der Speicherfeder 13 wirkt auf einen Federspeicher-Kolben 21. Dieser wird durch die Wirkung der im Federspeicher-Druckraum 14 eingeschlossenen Druckluft in der gezeichneten Stellung gehalten. Falls diese Druckluft abgelassen wird, entspannt sich die Speicherfeder 13 und der Federspeicher-Kolben 21 bewegt durch die Kraft der Speicherfeder eine Federspeicher-Kolbenstange 20 nach rechts. Diese Kraft wird über eine im Betriebsbremszylinder 7 angeordnete Membran 10 auf eine Kolbenscheibe 22 und die Betriebsbrems-Kolbenstange 17 auf die eigentliche Bremse (nicht dargestellt) übertragen. Die Membran 10 ist zwischen einem ersten Flansch 8 am ersten Bauteil 6 (Verbindungsteil) und einem zweiten Flansch 9 am zweiten Bauteil 7a (Betriebsbremsgehäuse) eingeklemmt. Durch Herausdrehen der Rückstell-Schraube 16 kann die Speicherfeder 13 bei drucklosem Federspeicher-Druckraum 14 mechanisch komprimiert werden um die Parkbremsung zu lösen.

Eine Betriebsbremsung erfolgt durch Belüftung eines Druckraums 15 des Betriebsbremszylinders 7, wodurch durch das Walken der Membran 10 die Kolbenscheibe 22 mit der Betriebsbrems-Kolbenstange 17 nach rechts bewegt, und damit die eigentliche Bremse betätigt wird. Die Belüftung oder Entlüftung des Federspeicher-Druckraums 14 bzw. des Druckraums 15 der Betriebsbremse erfolgt über Druckluft-Anschlüsse 25, 26.

In der Figur 2 ist der Verschlussring 1 in einem einseitig fertig gestellten Zustand dargestellt. Die linke Seite des Verschlussrings 1 ist bereits umgebördelt, während die rechte Seite sich noch im Ursprungszustand befindet.

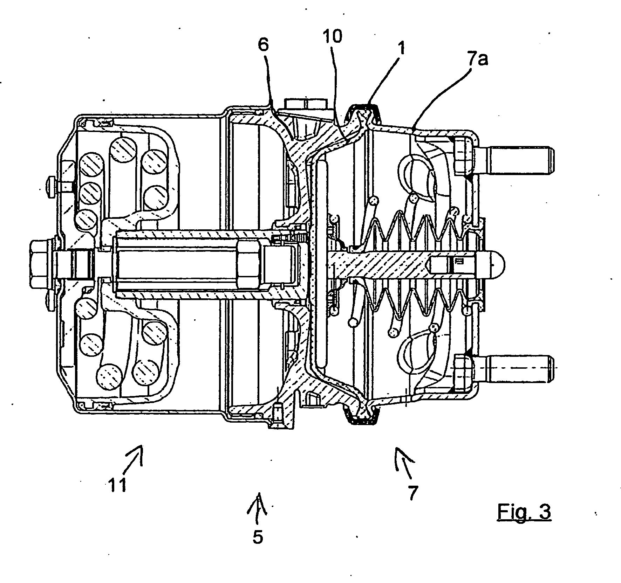

In der Figur 3 ist der Bremszylinder aus der Figur 2 dargestellt, hier ist jedoch der Verschlussring 1 bereits fertig gestellt und somit auch die rechte Seite des Verschlussrings 1 umgebördelt. Somit sind das erste Bauteil 6 (Verbindungsteil) sowie das zweite Bauteil 7a (Betriebsbremsgehäuse) unter Zwischenlegung der Membran 10 formschlüssig und luftdicht miteinander verbunden und axial verpresst.

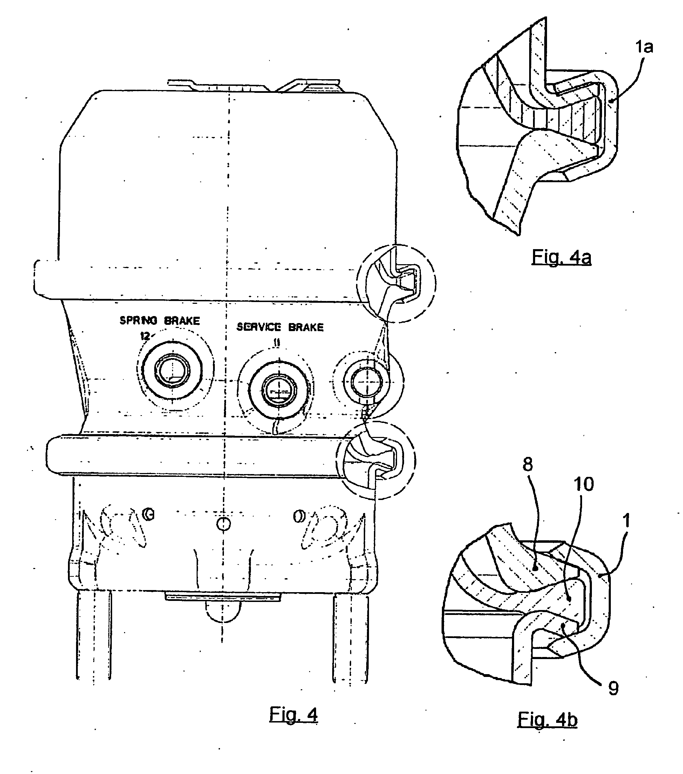

Die Figur 4 zeigt im Gegensatz zu den Fig. 1 bis 3 eine Variante eines Federspeicher-Bremszylinders als einen so genannten Doppelmembran-Bremszylinder. Dabei ist der Federspeicher-Druckraum 14 nicht durch den Federspeicher-Kolben 21 und dem ersten Bauteil 6 der Figur 2 begrenzt, sondern anstelle des FederspeicherKolbens 21 durch eine ähnliche Membran wie die Membran 10 des Betriebsbremsteils, deren Verpressung zwischen den vergleichbaren Flanschen 8 und 9 in Figur 4b auch wie in Figur 4a dargestellt erreicht wird. Der dargestellte Doppelmembran-Bremszylinder weist daher zwei Verschlussringe (1, 1 a) auf.

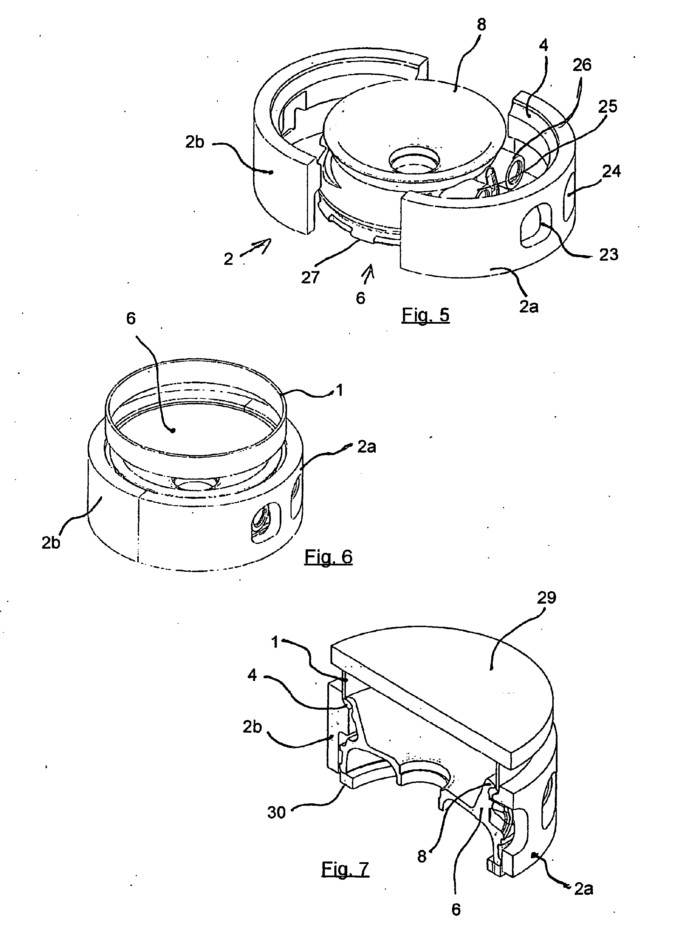

Die Figur 5 zeigt das zur Durchführung des erfindungsgemäßen Verfahrens verwendete geteilte Bördelwerkzeug 2, welches aus den Teilen 2a und 2b besteht. Das Teil 2a weist zwei Öffnungen 23, 24 auf, durch welche im geschlossenen Zustand des Bördelwerkzeugs 2 zwei Druckluftanschlüsse 25, 26 des ersten Bauteils 6 (Verbindungsteil) hindurchragen. Das erste Bauteil 6 ist z.B. als Aluminium-Druckgussbauteil ausgebildet. Der obere Rand des ersten Bauteils 6 ist als erster Flansch 8 ausgebildet. Der umzuformende Verschlussring 1 ist in passender koaxialer Position über dem Bördelwerkzeug 2 angeordnet (vgl. Figur 6). Am unteren Rand des ersten Bauteils 6 erkennt man Vorsprünge 27, welche zum Bajonettverschluss 12 zur Verbindung des Federspeichergehäuses 11a gehören.

Anstelle eines Bajonettverschlusses kann der untere Rand aber auch wie der obere Rand am Bauteil 6 ausgeführt werden. In diesem Fall wird, wie in der Beschreibung zu Figur 4 erwähnt, auch für die Verbindung des Federspeichergehäuses 11a an das erste Bauteil 6 das Verfahren gemäß Patentanspruch 1 oder Patentanspruch 12 verwendet.

Das aus den Teilen 2a, 2b bestehende Bördelwerkzeug 2 ist am oberen Rand mit einer nach innen geformten, gerundeten Kontur 4 versehen, durch welche im weiteren Verlauf des Verfahrens der untere Rand des Verschlussringes 1 um den Flansch 8 herumgebördelt wird. Das Bördelwerkzeug 2 besteht vorzugsweise aus Stahl.

Die Figur 6 zeigt das in das Bördelwerkzeug 2a, 2b eingelegte erste Bauteil 6, wobei jetzt die beiden Hälften 2a, 2b des geteilten Bördelwerkzeugs 2 geschlossen sind. Die Druckluftanschlüsse 25, 26 ragen dabei in die Öffnungen 23, 24 des Bördelwerkzeugs 2a (vgl. Fig. 5). Der noch unverformte Verschlussring 1 befindet sich noch oberhalb des ersten Bauteils 6.

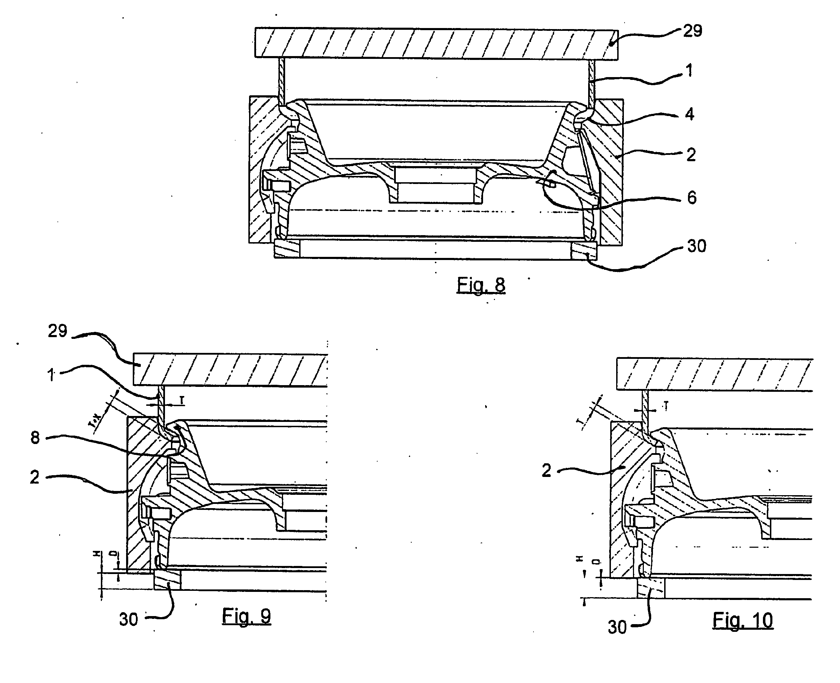

Die Figur 7 zeigt eine vergrößerte, geschnittene Darstellung des Bördelwerkzeugs 2 gemäß der Figur 6. Man erkennt wiederum die zur Umformung des Verschlussrings 1 dienende gerundete, geformte Kontur 4. Der Verschlussring 1 befindet sich bereits in der Führung des Bördelwerkzeugs 2a, 2b, aber noch oberhalb der geformten Kontur 4. Bewirkt durch das Anheben der Abstützung 30 befindet sich das erste Bauteil 6 in einer leicht erhöhten Position (vgl. Figur 9), damit der erste Flansch 8 des ersten Bauteils 6 nicht während des Bördelvorgangs durch den Verschlussring 1 berührt bzw. beschädigt werden kann.

Die Figur 8 zeigt eine vergrößerte Darstellung der Figur 7, zu Beginn des Bördelvorgangs. In der Figur 8 befindet sich der Verschlussring 1 bereits in der Führung des Bördelwerkzeugs 2, aber noch oberhalb der geformten Kontur 4.

Im Folgenden wird, wie in den Figuren 9 und 10 ersichtlich ist, der Verschlussring 1 mittels einer Druckplatte 29 nach unten in das Bördelwerkzeug 2 hineingedrückt. Dabei wird der untere Rand des Verschlussrings 1 nach innen um den Flansch 8 herumgebördelt.

Dieser Vorgang ist in der Figur 9, die den linken Teil der Figur 8 zeigt, abgeschlossen. Wie bereits oben erwähnt, befinden sich das erste Bauteil 6 und die Abstützung 30 in den Figuren 7 bis 9 in einer erhöhten axialen Position, damit durch den Bördelvorgang der, z.B. aus Aluminium bestehende, erste Flansch 8 des ersten Bauteils 6 (Verbindungsteil) nicht durch den unteren Rand des Verschlussrings 1 beschädigt wird. Der Abstand zwischen Bördelwerkzeug 2 und Abstützung 30 beträgt H, die Differenz bzw. Überdeckung beträgt D. Wenn D größer Null ist, dann ist der Bördelkanal gleich T+X, wobei T die Dicke des Materials des Verschlussringes 1 ist, und X die Vergrößerung des Bördelkanals zwischen der geformten Kontur 4 und dem Flansch 8, erreicht durch das Anheben der Abstützung 30 um einen Betrag D größer Null (vgl. Fig. 9 und 10).

In der Figur 10 ist demgegenüber das erste Bauteil 6 durch die Abstützung 30 abgesenkt, sodass nunmehr der erste Flansch 8 am unteren, umgebördelten Rand des Verschlussrings 1 anliegt. Hierdurch werden die Oberflächen der aneinander liegenden Teile nicht beschädigt, wodurch die Korrosionsbeständigkeit des Bauteils 6 gewährleistet ist. Der Abstand H ist um die Differenz D aus der Figur 9 vergrößert. Die Differenz D in der Figur 10 beträgt Null, wodurch auch X gleich Null ist und keine Vergrößerung des Bördelkanals mehr vorhanden ist.

In diesem Zustand, welcher mit der Figur 2 korrespondiert, wird nach Entfernung der Druckplatte 29 das zweite Bauteil 7 (Betriebsbremszylinder) unter Zwischenlegung der Membran 10 aufgelegt, und der obere Rand des Verschlussrings 1 unter Verwendung eines weiteren Bördelwerkzeugs umgebördelt. Das weitere Bördelwerkzeug (nicht dargestellt) ist im Prinzip ein umgedrehtes Bördelwerkzeug 2, wobei aber hier auf eine Teilung des Werkzeugs verzichtet werden kann. Nach Umbördelung auch des oberen Randes des geschlossenen Verschlussrings 1 ist der Zustand nach Figur 1 erreicht. Die beiden Bauteile 6 und 7 des Bremszylinders 5 sind damit formschlüssig und betriebssicher mit ausreichender Dichtigkeit miteinander verbunden.

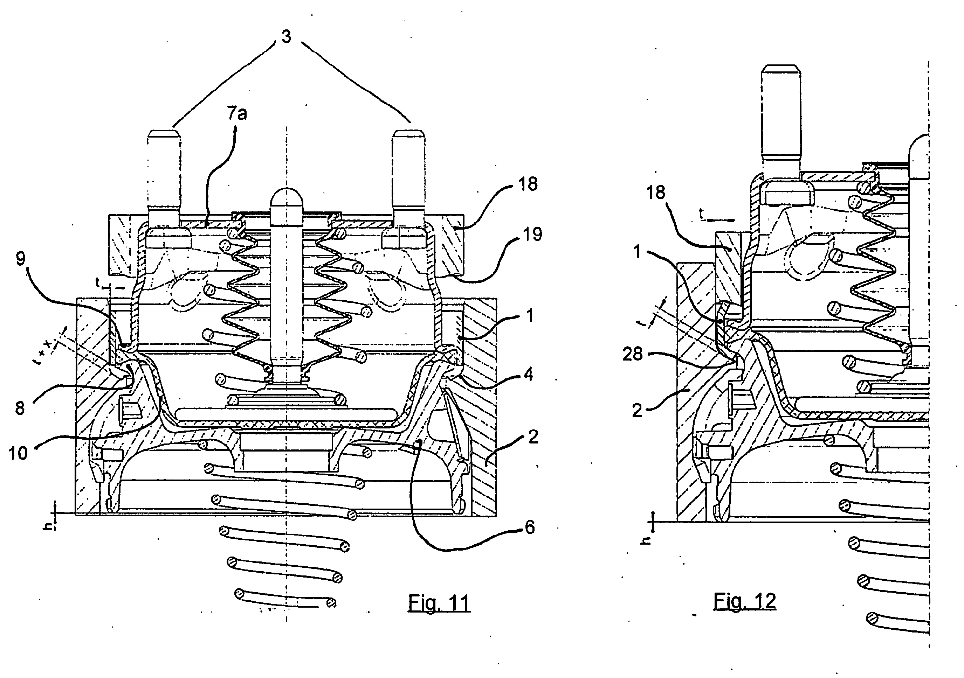

Die Figuren 11 bis 14 zeigen drei Stufen einer Variante des erfindungsgemäßen Verbindungsverfahrens, wobei hier die Verbindung bzw. die Umformung des Verschlussrings 1 mit nur einem Hub eines Werkzeugs (ringförmiger Stempel 18) fertiggestellt wird.

In der Figur 11 sind im ersten Verfahrensschritt das erste Bauteil 6, das zweite Bauteil 7a mit alle weiteren Bauteilen des Betriebsbremszylinders 7 einschließlich der zwischengelegten Membran 10 in das Bördelwerkzeug 2 eingelegt. Auch der geschlossene Verschlussring 1 ist bereits in das Bördelwerkzeug 2 eingelegt.

Im Folgenden werden durch einen einhubigen Bördelvorgang die beiden Ränder des Verschlussrings 1 um den ersten Flansch 8 des ersten Bauteils 6 sowie den zweiten Flansch 9 des zweiten Bauteils 7 bzw. des Betriebsbremsgehäuses 7a herumgeformt und diese beiden Bauteile somit formschlüssig verbunden.

Hierzu wird, wie aus der Figur 11 ersichtlich, mittels einer geeigneten Vorrichtung (nicht dargestellt) ein ringförmiger Stempel 18 mit einer abgeschrägten Kontur 19 von oben auf den Verschlussring 1 gedrückt. Dieser bewegt sich daraufhin nach unten in Richtung auf die geformte, gerundete Kontur 4.

Wie aus der Figur 12 ersichtlich, wird dadurch zunächst der untere Rand des Verschlussrings 1 nach innen umgeformt. Die Bördelung des unteren Randes wird dabei durch eine Kante 28 des Werkzeugs 2 auf einen maximal zulässigen Wert begrenzt.

Wie aus der Figur 12 weiter ersichtlich, wird anschließend auch der obere Rand des Verschlussrings 1 nach innen umgeformt und um den zweiten Flansch 9 des zweiten Bauteils 7 bzw. des Betriebsbremsgehäuses7a herumgebogen.

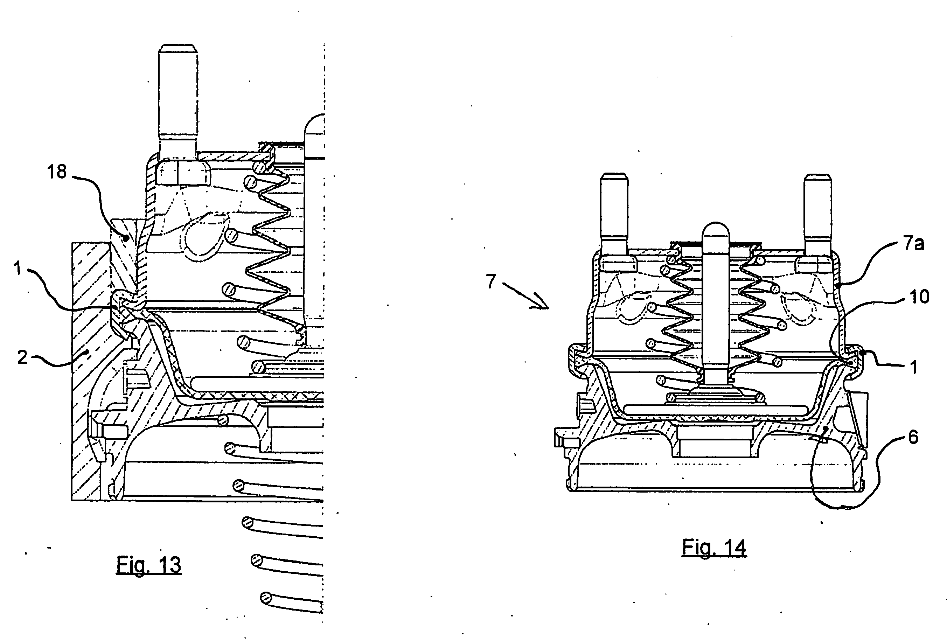

In der Figur 13 ist der Endzustand des einhubigen Bördelverfahrens erreicht. Beide Enden des Verschlussrings 1 sind nun um die Flansche 8 bzw. 9 herumgeformt. Damit ist der Bördelvorgang beendet. Der Stempel 18 kann nun zurückgefahren werden und das geteilte Bördelwerkzeug 2 kann nun zur Entnahme des fertig verbundenen Bremszylinder 5 geöffnet werden. Dieser ist in der Figur 14 dargestellt.

Wie oben beschrieben, besteht das Bördelwerkzeug 2 zweckmäßig aus zwei Teilen, da sich die Druckluft-Anschlüsse 25,26 auf einem größerem Durchmesser befinden als der umzubördelnde Rand, und daher ein axialer Bördelvorgang aus der Richtung der Druckluft-Anschlüsse 25,26 mit einem einteiligem Werkzeug nicht möglich ist. Der Verschlussring 1 muss möglichst korrosionsbeständig ausgeführt sein. Hierzu kann er vor dem Bördelvorgang verzinkt werden. Es ist auch möglich, den Verschlussring 1 noch zusätzlich zu lackieren. In jedem Fall wird die Oberflächenbeschichtung des Verschlussrings durch den erfindungsgemäßen Bördelvorgang nicht beschädigt.

Der Verschlussring 1 wird vorzugsweise aus Stahl hergestellt. Er kann jedoch auch aus Aluminium sein. Dabei muss die Wandstärke so ausgewählt sein, dass eine ausreichende Festigkeit gewährleistet ist.

Zur Herstellung des Verschlussrings 1 kann dieser von einem Rohr passenden Durchmessers und Materials abgesägt werden.

Es ist aber auch möglich, den Verschlussring zunächst aus einem Blech auszustanzen und den so entstandenen flachen Ring anschließend zu einem Zylinder mit passendem Durchmesser umzuformen.

Weiter ist es auch möglich, den Verschlussring 1 aus einem Blechstreifen herzustellen, der umgebogen und an den Enden zusammengeschweißt ist. Dabei kann die Schweißnaht gerade, schräg, oder gezahnt ausgebildet sein.

Es ist auch möglich, das erfindungsgemäße Verfahren mit einem Verschlussring I durchzuführen, welcher einseitig an seinem oberen Rand bereits umgebördelt ist. Ein solcher Ring hätte dann die in der Fig. 2 dargestellte Form.

Beim erfindungsgemäßen Verfahren ist es unerheblich, ob wie oben beschrieben, die Druckplatte 29 bzw. der Stempel 18 nach unten bewegt werden, oder ob umgekehrt die Druckplatte 29 bzw. der Stempel 18 fest stehen und statt dessen alle anderen Bauteile und Werkzeuge der Anordnung nach oben bewegt werden. Grundsätzlich ist nur die Relativbewegung zwischen Bördelwerkzeug 2 und Verschlussring 1 entscheidend.

### Bezugszeichenliste

| | |
|---|---|
| 1. | Verschlussring |
| 2. | Bördelwerkzeug |
| 2a | Bördelwerkzeug (rechter Teil) |
| 2b | Bördelwerkzeug (linker Teil) |
| 3 | Befestigungsschraube |
| 4 | geformte, gerundete Kontur |
| 5 | Bremszylinder |
| 6 | erstes Bauteil (Verbindungsteil) |
| 7 | Betriebsbremszylinder |
| 7a | zweites Bauteil (Betriebsbremsgehäuse) |
| 8 | erster Flansch |
| 9 | zweiter Flansch |
| 10 | Membran |
| 11 | Federspeicherteil |
| 11 a | Federspeichergehäuse |
| 12 | Bajonettverschluss |
| 13 | Speicherfeder |
| 14 | Federspeicher-Druckraum |
| 15 | Druckraum für Betriebsbremse |
| 16 | Rückstell-Schraube |
| 17 | Betriebsbrems-Kolbenstange |
| 18 | ringförmiger Stempel |
| 19 | abgeschrägte Kontur |
| 20 | Federspeicher-Kolbenstange |
| 21 | Federspeicher-Kolben |
| 22 | Kolbenscheibe |
| 23, 24 | Öffnungen |
| 25, 26 | Druckluft-Anschlüsse |
| 27 | Vorsprung |
| 28 | Kante |
| 29 | Druckplatte |
| 30 | Abstützung |
| 31 | Dichtung |

## Patentansprüche

1. Verfahren zur Herstellung einer formschlüssigen Verbindung zwischen einem ersten Bauteil (6) und einem zweiten Bauteil (7a) eines in einem Fahrzeug befindlichen Aggregats, insbesondere eines Bremszylinders (5), wobei die beiden Bauteile (6, 7a) zylinderförmig sind und je einen Flansch (8, 9) aufweisen, und wobei die Verbindung durch einen Verschlussring mit U-förmigen Querschnitt erfolgt, welcher die beiden Flansche (8, 9) der beiden Bauteile (6, 7a) umfasst, **gekennzeichnet durch** folgende Verfahrensschritte:
a) das erste Bauteil (6) des Aggregats wird in ein Bördelwerkzeug (2) eingelegt, welches den Flansch (8) des ersten Bauteils (6) mit einer geformten, gerundeten Kontur (4) umfasst
b) ein geschlossener zylinderförmiger Verschlussring (1) wird axial von oben in die Kontur (4) gedrückt, wobei der untere Rand des Verschlussrings (1) um den ersten Flansch (8) geformt wird
c) das zweite Bauteil bzw. Betriebsbremsgehäuse (7a) des Aggregats wird unter Zwischenlagerung einer Membran (10) auf das erste Bauteil (6) gelegt, sodass sich die beiden Flansche (8, 9) gegenüber liegen.
d) mit einem weiteren Bördelwerkzeug wird der obere Rand des Verschlussrings (1) um den zweiten Flansch (9) geformt.

2. Verfahren nach Anspruch 1, **dadurch gekennzeichnet, dass** das Bördelwerkzeug (2) aus zwei Teilen (2a, 2b) besteht.

3. Verfahren nach Anspruch 1, **dadurch gekennzeichnet, dass** das weitere Bördelwerkzeug als ringförmiger Stempel (18) ausgebildet ist.

4. Verfahren nach einem oder mehreren der Ansprüche 1 bis 3, **dadurch gekennzeichnet, dass** der Verschlussring (1) vor dem Bördelvorgang lackiert wird.

5. Verfahren nach einem oder mehreren der Ansprüche 1 bis 4, **dadurch gekennzeichnet, dass** der Verschlussring (1) vor dem Bördelvorgang verzinkt wird.

6. Verfahren nach einem oder mehreren der Ansprüche 1 bis 5, **dadurch gekennzeichnet, dass** der Verschlussring (1) aus Stahl ist.

7. Verfahren nach einem oder mehreren der Ansprüche 1 bis 5, **dadurch gekennzeichnet, dass** der Verschlussring (1) aus Aluminium ist.

8. Verfahren nach einem oder mehreren der Ansprüche 1 bis 7, **dadurch gekennzeichnet, dass** der Verschlussring (1) von einem Rohr abgetrennt wird.

9. Verfahren nach einem oder mehreren der Ansprüche 1 bis 7, **dadurch gekennzeichnet, dass** der Verschlussring (1) als Ring aus einem Blech ausgestanzt wird und anschließend zu einem Zylinder geformt wird.

10. Verfahren nach einem oder mehreren der Ansprüche 1 bis 7, **dadurch gekennzeichnet, dass** der Verschlussring (1) ein Blechstreifen ist, der an den Enden zusammengeschweißt ist.

11. Verfahren nach einem oder mehreren der Ansprüche 1 bis 10, **dadurch gekennzeichnet, dass** der Verschlussring (1) einseitig vorgeformt ist.

12. Verfahren zur Herstellung einer formschlüssigen Verbindung zwischen einem ersten Bauteil (6) und einem zweiten Bauteil bzw. Betriebsbremsgehäuse (7a) eines in einem Fahrzeug befindlichen Aggregats, insbesondere eines Bremszylinders (5), wobei die beiden Bauteile zylinderförmig sind und je einen Flansch (8, 9) aufweisen, und wobei die Verbindung durch einen Verschlussring (1) mit U-förmigen Querschnitt erfolgt, welcher die beiden Flansche (8, 9) der beiden Bauteile (6, 7a) umfasst,
**gekennzeichnet durch** folgende Verfahrensschritte:
a) das Aggregat mit dem ersten Bauteil (6) und dem zweiten Bauteil (7a) sowie mit der dazwischengelegten Membran (10) wird in ein Bördelwerkzeug (2) eingelegt, welches den Flansch (8) des ersten Bauteils (6) mit einer gerundeten Kontur (4) umfasst
b) der Verschlussring (1) wird zwischen dem Bördelwerkzeug (2a, 2b) sowie den Flanschen (8, 9) der beiden Bauteile (6, 7) eingelegt
c) ein ringförmiger Stempel (18) mit einer abgeschrägten Kontur (19) drückt in einem Hub von oben auf den freien Rand des Verschlussrings (1), bis der Verschlussring (1) an beiden Rändern so umgeformt ist, dass er die Flansche (8, 9) umfasst.

13. Verfahren nach Anspruch 12, **dadurch gekennzeichnet, dass** das Bördelwerkzeug (2) aus zwei Teilen (2a, 2b) besteht.

14. Werkzeug zur Durchführung eines Verfahrens nach einem oder mehreren der Ansprüche 1 bis 13, **dadurch gekennzeichnet, dass** es als ringförmiges, geteiltes Bördelwerkzeug (2a, 2b) ausgebildet ist und zum axialen Bördeln des Randes eines Verschlussringes (1) eine geformte, gerundete Kontur (4) aufweist.

## Claims

1. Method for producing a form-fitting connection between a first component (6) and a second component (7a) of an assembly located in a vehicle, in particular of a brake cylinder (5), wherein the two components (6, 7a) are cylindrical and each have a flange (8, 9), and wherein the connection is made by a locking ring with a U-shaped cross section, which encompasses the two flanges (8, 9) of the two components (6, 7a), **characterized by** the following method steps:
a) the first component (6) of the assembly is placed into a flanging tool (2), which encompasses the flange (8) of the first component (6) with a shaped, rounded contour (4),
b) a closed cylindrical locking ring (1) is pressed axially from above into the contour (4), the bottom edge of the locking ring (1) being shaped around the first flange (8),
c) the second component or service brake housing (7a) of the assembly is placed onto the first component (6) with the interposition of a membrane (10), such that the two flanges (8, 9) lie opposite one another,
d) the top edge of the locking ring (1) is shaped around the second flange (9) with a further flanging tool.

2. Method according to Claim 1, **characterized in that** the flanging tool (2) consists of two parts (2a, 2b).

3. Method according to Claim 1, **characterized in that** the further flanging tool is in the form of an annular punch (18).

4. Method according to one or more of Claims 1 to 3, **characterized in that** the locking ring (1) is painted before the flanging operation.

5. Method according to one or more of Claims 1 to 4, **characterized in that** the locking ring (1) is galvanized before the flanging operation.

6. Method according to one or more of Claims 1 to 5, **characterized in that** the locking ring (1) is made of steel.

7. Method according to one or more of Claims 1 to 5, **characterized in that** the locking ring (1) is made of aluminium.

8. Method according to one or more of Claims 1 to 7, **characterized in that** the locking ring (1) is separated from a tube.

9. Method according to one or more of Claims 1 to 7, **characterized in that** the locking ring (1) is punched out of a metal sheet as a ring and is then shaped to form a cylinder.

10. Method according to one or more of Claims 1 to 7, **characterized in that** the locking ring (1) is a sheet metal strip, which is welded together at the ends.

11. Method according to one or more of Claims 1 to 10, **characterized in that** the locking ring (1) is preshaped on one side.

12. Method for producing a form-fitting connection between a first component (6) and a second component or service brake housing (7a) of an assembly located in a vehicle, in particular of a brake cylinder (5), wherein the two components are cylindrical and each have a flange (8, 9), and wherein the connection is made by a locking ring (1) with a U-shaped cross section, which encompasses the two flanges (8, 9) of the two components (6, 7a),
**characterized by** the following method steps:
a) the assembly with the first component (6) and the second component (7a) and also with the membrane (10) placed therebetween is placed into a flanging tool (2), which encompasses the flange (8) of the first component (6) with a rounded contour (4),
b) the locking ring (1) is placed between the flanging tool (2a, 2b) and also the flanges (8, 9) of the two components (6, 7),
c) an annular punch (18) with a bevelled contour (19) presses in one stroke from above onto the free edge of the locking ring (1), until the locking ring (1) is formed at both edges in such a way that it encompasses the flanges (8, 9).

13. Method according to Claim 12, **characterized in that** the flanging tool (2) consists of two parts (2a, 2b).

14. Tool for carrying out a method according to one or more of Claims 1 to 13, **characterized in that** it is in the form of an annular, split flanging tool (2a, 2b) and has a shaped, rounded contour (4) for axially flanging the edge of a locking ring (1).

## Revendications

1. Procédé de réalisation d'une liaison par complémentarité de formes entre un premier composant (6) et un deuxième composant (7a) d'un groupe se trouvant dans un véhicule, en particulier d'un cylindre de frein (5), les deux composants (6, 7a) étant cylindriques et comprenant un rebord respectif (8, 9), et la liaison s'effectuant au moyen d'une bague de fermeture présentant une section transversale en forme de U, laquelle bague de fermeture entoure les deux rebords (8, 9) des deux composants (6, 7a),
**caractérisé par** les étapes de procédé suivantes :
a) le premier composant (6) du groupe est inséré dans un outil de bordage (2), lequel entoure le rebord (8) du premier composant (6) avec un contour arrondi façonné (4),
b) une bague de fermeture cylindrique fermée (1) est pressée axialement par le haut dans le contour (4), le bord inférieur de la bague de fermeture (1) étant façonné autour du premier rebord (8),
c) le deuxième composant ou le boîtier de frein de service (7a) du groupe est posé sur le premier composant (6) avec intercalation d'une membrane (10), de telle sorte que les deux rebords (8, 9) soient en regard l'un de l'autre,
d) le bord supérieur de la bague de fermeture (1) est façonné autour du deuxième rebord (9) à l'aide d'un outil de bordage supplémentaire.

2. Procédé selon la revendication 1, **caractérisé en ce que** l'outil de bordage (2) est constitué de deux parties (2a, 2b).

3. Procédé selon la revendication 1, **caractérisé en ce que** l'outil de bordage supplémentaire est réalisé sous forme de poinçon annulaire (18).

4. Procédé selon l'une quelconque ou plusieurs des revendications 1 à 3, **caractérisé en ce que** la bague de fermeture (1) est peinte avant l'opération de bordage.

5. Procédé selon l'une quelconque ou plusieurs des revendications 1 à 4, **caractérisé en ce que** la bague de fermeture (1) est galvanisée avant l'opération de bordage.

6. Procédé selon l'une quelconque ou plusieurs des revendications 1 à 5, **caractérisé en ce que** la bague de fermeture (1) est constituée d'acier.

7. Procédé selon l'une quelconque ou plusieurs des revendications 1 à 5, **caractérisé en ce que** la bague de fermeture (1) est constituée d'aluminium.

8. Procédé selon l'une quelconque ou plusieurs des revendications 1 à 7, **caractérisé en ce que** la bague de fermeture (1) est séparée d'un tube.

9. Procédé selon l'une quelconque ou plusieurs des revendications 1 à 7, **caractérisé en ce que** la bague de fermeture (1) est découpée sous forme de bague dans une tôle et est ensuite façonnée pour former un cylindre.

10. Procédé selon l'une quelconque ou plusieurs des revendications 1 à 7, **caractérisé en ce que** la bague de fermeture (1) est un ruban de tôle dont les extrémités sont soudées l'une à l'autre.

11. Procédé selon l'une quelconque ou plusieurs des revendications 1 à 10, **caractérisé en ce que** la bague de fermeture (1) est préfaçonnée d'un côté.

12. Procédé de réalisation d'une liaison par complémentarité de formes entre un premier composant (6) et un deuxième composant ou un boîtier de frein de service (7a) d'un groupe se trouvant dans un véhicule, en particulier d'un cylindre de frein (5), les deux composants étant cylindriques et comprenant un rebord respectif (8, 9), et la liaison s'effectuant au moyen d'une bague de fermeture (1) présentant une section transversale en forme de U, laquelle bague de fermeture entoure les deux rebords (8, 9) des deux composants (6, 7a),
**caractérisé par** les étapes de procédé suivantes :
a) le groupe comprenant le premier composant (6) et le deuxième composant (7a) ainsi que la membrane intercalée entre ceux-ci est inséré dans un outil de bordage (2) qui entoure le rebord (8) du premier composant (6) avec un contour arrondi (4),
b) la bague de fermeture (1) est insérée entre l'outil de bordage (2a, 2b) et les rebords (8, 9) des deux composants (6, 7),
c) un poinçon annulaire (18) présentant un contour biseauté (19) presse en une course par le haut sur le bord libre de la bague de fermeture (1), jusqu'à ce que la bague de fermeture (1) soit façonnée au niveau des deux bords de sorte qu'elle entoure les rebords (8, 9).

13. Procédé selon la revendication 12, **caractérisé en ce que** l'outil de bordage (2) est constitué de deux parties (2a, 2b).

14. Outil pour mettre en oeuvre un procédé selon l'une quelconque ou plusieurs des revendications 1 à 13, **caractérisé en ce qu'**il est réalisé sous forme d'outil de bordage annulaire divisé (2a, 2b) et comprend, en vue du bordage axial du bord d'une bague de fermeture (1), un contour arrondi façonné (4).
